# EUROPÄISCHE PATENTSCHRIFT

(11) **EP 3 433 190 B1**
(45) Veröffentlichungstag und Bekanntmachung des Hinweises auf die Patenterteilung: **04.09.2024**
(21) Anmeldenummer: 17791362.1
(22) Anmeldetag: 26.10.2017
(51) Int. Cl.: B65G 47/86, B67C 7/00, F15B 15/14

(54) **HÖHENVERSTELLVORRICHTUNG FÜR EINE GREIF- UND TRANSPORTEINRICHTUNG FÜR BEHÄLTER**
HEIGHT-ADJUSTING DEVICE FOR A GRIPPING AND TRANSPORTING MEANS FOR CONTAINERS
DISPOSITIF DE RÉGLAGE EN HAUTEUR POUR UNE INSTALLATION DE PRÉHENSION ET DE TRANSPORT DE RÉCIPIENTS

(30) Priorität: 09.03.2017 DE 102017105015
(43) Veröffentlichungstag der Anmeldung: 30.01.2019
(73) Patentinhaber: Tyrolon-Schulnig GmbH, 6395 Hochfilzen (AT)
(72) Erfinder: SCHULNIG, Elmar, 6391 Fieberbrunn (AT); SCHULNIG, Ludwig, 6392 St. Jakob in Haus (AT)
(74) Vertreter: Meissner Bolte Partnerschaft mbB
(86) Internationale Anmeldenummer: PCT/EP2017/077404
(87) Internationale Veröffentlichungsnummer: WO 2018/162097

(56) Entgegenhaltungen:
- EP-A1- 2 186 759
- WO-A1-2017/009291
- WO-A2-02/058615
- CN-U- 203 450 734
- DE-A1- 19 841 792
- DE-C- 597 564
- DE-U1- 9 300 720
- JP-A- 2010 168 047
- JP-A- S5 311 282
- US-A- 2 497 813

## Beschreibung

Die Erfindung betrifft eine Höhenverstellvorrichtung für eine Greif- und Transporteinrichtung für Behälter. Des Weiteren betrifft die Erfindung eine Greif- und Transportvorrichtung zum Greifen, Halten, Führen und Transportieren von insbesondere flaschenartigen Behältern, mit einer Höhenverstellvorrichtung.

Greif- und Transportvorrichtungen zum Greifen, Halten und/oder Führen von Behältern sind bereits aus dem Stand der Technik bekannt, insbesondere unter dem Namen "Klammerstern". Sie werden vornehmlich bei der fließbandtechnischen Bearbeitung von Behältern bzw. Behältnissen verwendet, die insbesondere zur Befüllung mit Flüssigkeiten oder anderweitigem Schüttgut vorgesehen sind.

Die Massenverarbeitung von derartigen Behältern bzw. Behältnissen macht regelmäßige Umstellungen der Greif- und Transportvorrichtungen auf die jeweils unterschiedlichen Behältertypen notwendig. Solche Behältertypen können sich in ihrer allgemeinen Formgebung, insbesondere in ihrer Höhe, ihrer Breite bzw. ihrem Durchmesser, wesentlich voneinander unterscheiden.

Eine fließbandtechnische Bearbeitung von großen Stückzahlen an Behältern macht gleichfalls eine Justierung der Greif- und Transportvorrichtungen zwingend notwendig, um eine sichere Handhabung durch die Greif- und Transportvorrichtung gewährleisten zu können und Ausschuss im Sinne von fehlerhafter Befüllung, fehlerhafter Etikettierung oder zerstörten Behältern zu vermeiden.

Darüber hinaus sind auch hygienische Aspekte innerhalb der fließbandtechnischen Produktionslinie, insbesondere bei Abfüllung bzw. Weiterverarbeitung von Lebensmitteln oder dergleichen, zu berücksichtigen.

Bei bekannten Anlagen besteht der Nachteil, dass eine Höhenverstellung zur Anpassung auf verschiedene Typen von zu verarbeitenden Behältern eine umfangreiche Umrüstung der Maschinen notwendig macht. Während des Umrüstungsprozesses muss ein vollständiger Maschinenstillstand in Kauf genommen werden. In der Folge ist die Umstellung auf verschiedene Behältertypen zeit- und kostenaufwendig. Das Dokument JP S53 11282 A offenbart eine Höhenverstellvorrichtung für eine Greif- und Transporteinrichtung für Behälter, mit einem Hubzylinder, der einen Zylinderboden aufweist, ein Zylinderrohr, einen in dem Zylinderrohr dichtend gleitend angeordneten Kolben, einen Zylinderdeckel und eine mit dem Kolben verbundene erste Kolbenstange, wobei die erste Kolbenstange mit ihrem dem Kolben abgewandten Ende dichtend gleitend durch den Zylinderdeckel aus dem Zylinderrohr herausgeführt ist, wobei die erste Kolbenstange in dem Zylinderrohr angeordnet ist, wobei die erste Kolbenstange wenigstens einen ersten und zweiten Fluidweg aufweist, welcher an den dem Kolben abgewandten Ende der ersten Kolbenstangen mit einem Druckfluid beaufschlagbar ist, und dass der erste Fluidweg durch den Kolben hindurchführt und mit einem ersten Zylinderinnenraum zylinderbodenseitig des Kolbens kommuniziert und dass der zweite Fluidweg mit einem zweiten Zylinderinnenraum zylinderdeckelseitig des Kolbens kommuniziert, wobei eine zur Symmetrieachse des Hubzylinders koaxial angeordnete Zylinderbuchse mit einem Buchsenboden auf den dem Kolben abgewandten Ende der Kolbenstange vorgesehen ist, wobei die Zylinderbuchse in Richtung des Zylinderbodens des Zylinderrohrs offen ist und gleitend auf der Außenmantelfläche des Zylinderrohrs in axialer Richtung des Hubzylinders verschiebbar angeordnet ist, wobei die Fluidwege wenigstens teilweise in dem Buchsenboden der Zylinderbuchse aufgenommen und von außen zur Beaufschlagung mit Druckfluid zugänglich sind.

Der Erfindung liegt die Aufgabe zu Grunde, eine vorteilhafte Höhenverstellvorrichtung sowie eine Greif- und Transportvorrichtung zum Greifen, Halten, Führen und Transportieren von Behältern zur Verfügung zu stellen, wobei eine einfache, schnelle und kostengünstige Höhenverstellung in Verbindung mit einer vereinfachten Instandhaltung und Umrüstung bereitgestellt sein soll.

Diese Aufgabe wird durch eine Höhenverstellung gemäß den unabhängigen Ansprüchen 1 oder 2 sowie einer Greif- und Transportvorrichtung gemäß dem unabhängigen Anspruch 4 gelöst. Weitere vorteilhafte Ausbildungen der erfindungsgemäßen Gegenstände sind in den abhängigen Ansprüchen angegeben.

Die erfindungsgemäße Höhenverstellvorrichtung für eine Greif- und Transporteinrichtung für Behälter weist die Merkmale des Anspruchs 1 oder des Anspruchs 2 auf.

Die erste Kolbenstange ist in dem Zylinderrohr angeordnet, wobei die erste Kolbenstange wenigstens einen ersten und/oder zweiten Fluidweg aufweist, welcher an den dem Kolben abgewandten Ende der ersten Kolbenstangen mit einem Druckfluid beaufschlagbar ist.

Der erste Fluidweg führt durch den Kolben hindurch und kommuniziert mit einem ersten Zylinderinnenraum zylinderbodenseitig des Kolbens. Der zweite Fluidweg kommuniziert mit einem zweiten Zylinderinnenraum zylinderdeckelseitig des Kolbens.

Insbesondere können der erste und zweite Fluidweg bzw. Fluidleitung in Form einer Bohrung in der Kolbenstange über die Gesamtlänge oder eine Teillänge der Kolbenstange ausgebildet sein. So ist es möglich, dass ein einzelner Fluidweg als eine Bohrung in Längsrichtung über wenigstens einen Teil der Gesamtlänge der Kolbenstange ausgebildet ist und mittels einer zweiten Bohrung, die quer zur Längsachse der Kolbenstange vorgesehen ist, einen vollständigen Flussweg für ein Fluid innerhalb der Kolbenstange ausbildet.

Während die übliche Beaufschlagung mit einem Fluid an einem dem Kolben abgewandten Ende der Kolbenstange erfolgt, kann der Fluidaustritt an dem gegenüberliegenden Ende der Kolbenstange oder seitlich der Kolbenstange vorgesehen sein. Es ist zu berücksichtigen, dass Fluid entlang des Fluidwegs im Sinne einer zweckmäßigen Verwendung stets in beide Richtungen strömen bzw. ein- und austreten kann.

Unter dem Begriff "Behälter" sind im Sinne der vorliegenden Erfindung insbesondere Behälter bzw. Behältnisse zur Aufnahme bzw. zum Transport von Flüssigkeiten oder anderem Schüttgut zu verstehen. Verschiedene Typen von Behältern können sich unter anderem in ihrer Formgebung, ihrem maximalen Füllvolumen und ihrem Werkstoff wie Glas, Kunststoff oder Metall unterscheiden.

Der Hubzylinder ist im Rahmen des erfindungsgemäßen Gegenstands als ein doppeltwirkender Fluidzylinder bzw. Pneumatikzylinder vorgesehen. Auf diese Weise kann eine gezielte Positionierung des Kolbens innerhalb des Hubzylinders erfolgen, um eine spezifische, sichere Höhenverstellung für die Greif- und Transportvorrichtung bereitzustellen.

Darüber hinaus ist die Kolbenstange mit ihrem dem Kolben abgewandten Ende dichtend gleitend durch den Zylinderdeckel aus dem Zylinderrohr herausgeführt.

In diesem Kontext ist vorgesehen, dass die Kolbenstange mit einem Ende in dem Zylinderrohr vorgesehen ist, wobei sich das gegenüberliegende bzw. dem Kolben gegenüber abgewandte Ende der Kolbenstange außerhalb des Zylinderrohrs positioniert ist.

Damit die wenigstens eine Kolbenstange teilweise in dem Zylinderrohr angeordnet sein kann, ist sie durch den Zylinderdeckel bzw. durch eine korrespondierende Öffnung des Zylinderdeckels hindurchgeführt. Die Öffnung des Zylinderdeckels ist derart vorgesehen, dass die Kolbenstange dichtend gleitend aufgenommen ist.

Dichtend gleitend bedeutet insbesondere, dass die korrespondierende Öffnung eine radial bzw. umlaufende Dichtung für die Kolbenstange bereitstellt. Ferner ist die Kolbenstange, im Kontext der Hubzylinderbewegung, innerhalb der korrespondierenden Öffnung des Zylinderdeckels in Längsrichtung beweglich gelagert. Auf diese Weise wird das Innenvolumen des Zylinderrohrs gegenüber der Umgebung bzw. Atmosphäre fluiddicht abgeschlossen und gleichzeitig vor Staub- und Schmutzeintrag geschützt.

Ferner weist die die Kolbenstange wenigstens einen ersten und/oder zweiten Fluidweg auf, welcher an den dem Kolben abgewandten Ende der ersten Kolbenstangen mit einem Druckfluid beaufschlagbar ist. Vorzugsweise ist der Fluidweg bzw. die Fluidleitung innerhalb der Kolbenstange ausgebildet. Insbesondere kann der Fluidweg als eine Bohrung eine abgedichtete Nut oder dergleichen in der Kolbenstange vorgesehen sein, sodass ein Fluid bzw. Druckluft in Längsrichtung der Kolbenstange transferierbar bzw. übertragbar ist.

An dem Ende der Kolbenstange, welches dem Kolben gegenüber abgewandt ist, ist der erste und/oder zweite Fluidweg bzw. die Fluidleitung derart ausgestaltet, dass ein Fluid bzw. Druckluft zuführbar ist. Das abgewandte Ende der Kolbenstange ist somit als ein Fluidzulauf bzw. Fluideingang aufzufassen. So stellt die Kolbenstange sowohl eine mechanische Komponente als auch eine pneumatische Komponente des erfindungsgemäßen Hubzylinders dar.

Darüber hinaus ist vorgesehen, dass der erste Fluidweg durch den Kolben hindurchführt und mit einem ersten Zylinderinnenraum, welcher zylinderbodenseitig des Kolbens vorgesehen ist, kommuniziert. Der zweite Fluidweg kann mit einem zweiten Zylinderinnenraum, welcher zylinderdeckelseitig des Kolbens vorgesehen ist, kommunizieren.

Kommunikation bzw. kommunizieren bedeutet im Sinne der vorliegenden Erfindung, dass ein Fluid bzw. Druckluft übertragbar ist. So ist entlang des jeweiligen Flussweges eine strömungsförmige Verbindung bereitgestellt. Der Fluidweg bzw. die Fluidleitung kann dabei durch mehrere miteinander in Verbindung stehende Komponenten gemeinsam ausgebildet werden.

Der zylinderbodenseitige, erste Zylinderinnenraum kann insbesondere als ein mit Fluid befüllbares Volumen zur Extension des Hubzylinders vorgesehen sein. In diesem Falle durchragt der erste Fluidweg bzw. die erste Fluidleitung den Kolben entlang der Längserstreckung der Kolbenstange, um das bereitgestellte Fluid bzw. die bereitgestellte Druckluft bis in den ersten Zylinderinnenraum überleiten zu können.

Der zylinderdeckelseitige, zweite Zylinderinnenraum kann insbesondere als ein mit Fluid befüllbares Volumen zur Kontraktion bzw. Verkürzung des Hubzylinders vorgesehen sein.

Der erste Zylinderinnenraum kann auch als ein unterer Zylinderinnenraum verstanden werden, wobei der zweite Zylinderinnenraum als ein oberer Zylinderinnenraum auffassbar ist.

Im allgemeinen Sinne der vorliegenden Erfindung kann eine erste Komponente als untere Komponente und die zweite Komponente als obere Komponente vorgesehen sein, insbesondere wenn der Hubzylinder mit der Längsachse bzw. Symmetrieachse vertikal ausgerichtet ist. Dies trifft jedoch nicht auf die wenigstens eine erste Kolbenstange zu, wobei zwei Kolbenstangen vorzugsweise parallel zueinander ausgerichtet sind, gemäß der vorgesehenen Zweckverwendung.

Somit kann vorteilhafterweise ein doppeltwirkender oder einfach wirkender Hubzylinder bereitgestellt werden, wobei wenigstens ein erster oder zweiter Fluidweg integral in der wenigstens einen ersten Kolbenstange ausgebildet sind.

Gemäß der Erfindung nach Anspruch 1, weist der Hubzylinder eine zweite mit dem Kolben verbundene Kolbenstange auf, wobei die zweite Kolbenstange mit ihrem dem Kolben abgewandten Ende dichtend gleitend aus dem Zylinderrohr herausgeführt ist und die beiden Kolbenstangen exzentrisch in dem Kolben angeordnet sind.

Nach einer Ausführungsform sind die erste Kolbenstange und die zweite Kolbenstange symmetrisch zur Symmetrieachse des Hubzylinders angeordnet. Auf diese Weise erfolgt eine symmetrische Führung bei der Bewegung des Hubzylinders entlang der durch den Zylinderdeckel geführten Kolbenstangen.

Dabei kann vorgesehen sein, dass der erste Fluidweg durch den Kolben hindurchführt und mit einem ersten Zylinderinnenraum zylinderbodenseitig des Kolbens kommuniziert, und dass der zweite Fluidweg mit einem zweiten Zylinderinnenraum zylinderdeckelseitig des Kolbens kommuniziert.

Gemäß der Erfindung nach Anspruch 1 ist vorgesehen, dass die erste Kolbenstange den ersten Fluidweg bzw. die erste Fluidleitung zu dem ersten Zylinderinnenraum aufweist, wobei die zweite Kolbenstange den zweiten Fluidweg zu dem zweiten Zylinderinnenraum ausbildet.

Gemäß der Erfindung nach Anspruch 2 ist vorgesehen, dass die erste Kolbenstange den ersten und zweiten Fluidweg aufweist, wobei der erste und zweite Fluidweg an dem dem Kolben abgewandten Ende der ersten Kolbenstange mit einem Druckfluid beaufschlagbar sind und der erste Fluidweg durch den Kolben hindurchführt und mit einem ersten Zylinderinnenraum zylinderbodenseitig des Kolbens kommuniziert, wobei der zweite Fluidweg mit einem zweiten Zylinderinnenraum zylinderdeckelseitig des Kolbens kommuniziert.

So kann die erste Kolbenstange als einzige Kolbenstange vorgesehen sein. Die zweite Kolbenstange entfällt. Insbesondere weist die erste Kolbenstange zwei in Längsrichtung parallel zueinander verlaufende Bohrungen als ersten und zweiten Fluidweg auf.

Der erste Fluidweg erstreckt sich vorzugsweise über die gesamte Länge der ersten Kolbenstange. Der zweite Fluidweg erstreckt sich vorzugsweise über einen Teil der Länge der ersten Kolbenstange in deren Längsrichtung und ist in Verbindung mit einer zweiten Bohrung, quer zur Längsrichtung der ersten Kolbenstange, vervollständigt. So kann auf den zwei Seiten des Kolbens ein erster und ein zweiter Zylinderinnenraum über den ersten und zweiten Fluidweg zweckmäßig sowie bedarfsweise mit Druckluft belüftet oder entlüftet werden.

Im Sinne der vorliegenden Erfindung ist zu berücksichtigen, dass der Fluidweg bzw. der erste und zweite Fluidweg nicht nur allein durch eine Kolbenstange ausgebildet sein kann. Vielmehr können im Kontext der erfindungsgemäßen Höhenverstellvorrichtung weitere Komponenten des Hubzylinders, beispielsweise der Kolben, sowie auch z.B. standardmäßige Schlauchtüllen, Hohlschrauben oder dergleichen, den einzelnen Flussweg mit ausbilden bzw. weiterführen.

Unter einem Flussweg ist somit im Wesentlichen ein Volumen zu verstehen, entlang dem ein Fluid wie ein Gas oder eine Flüssigkeit an seinen Bestimmungsort im Sinne der Zweckverwendung übergeleitet werden kann.

Erfindungsgemäß ist eine zur Symmetrieachse des Hubzylinders koaxial angeordnete Zylinderbuchse mit einem Buchsenboden auf dem dem Kolben abgewandten Ende der Kolbenstange vorgesehen, wobei die Zylinderbuchse in Richtung des Zylinderbodens des Zylinderrohrs offen ist und gleitend auf der Außenmantelfläche des Zylinderrohrs in axialer Richtung des Hubzylinders verschiebbar angeordnet ist, wobei die Fluidwege der Kolbenstange wenigstens teilweise in dem Buchsenboden der Zylinderbuchse aufgenommen und von außen zur Beaufschlagung mit Druckfluid zugänglich sind.

Die Zylinderbuchse ist auf einer Seite mit dem Buchsenboden im Wesentlichen abgeschlossen. Es können dabei jedoch z.B. verschiedene Arten von Bohrungen in dem Buchsenboden vorgesehen sein. Auf der gegenüberliegenden Seite ist die Zylinderbuchse über ihren Innendurchmesser offen ausgestaltet.

So kann die Zylinderbuchse in Richtung der Symmetrieachse bzw. Längsachse wenigstens teilweise über das Zylinderrohr gestülpt werden. Die dichtend gleitende Anordnung der Zylinderbuchse auf der Außenmantelfläche des Zylinderrohrs bietet insbesondere den Vorteil, eine kontrollierte Relativbewegung zwischen Zylinderrohr und Zylinderbuchse gewährleisten und einem Eintrag von Schmutz im Sinne der hygienischen Bedingungen vorbeugen zu können.

Der erste und zweite Fluidweg bzw. die wenigstens eine erste Kolbenstange ist wenigstens teilweise in dem Buchsenboden der Zylinderbuchse aufgenommen und von außen zur Beaufschlagung mit Druckfluid zugänglich.

In diesem Sinne ist die wenigstens eine erste Kolbenstange mit dem Buchsenboden kraft- und/oder formschlüssig verbunden, vorzugsweise mittels eines Gewindes in den Buchsenboden eingeschraubt. Selbiges kann gegebenenfalls für die zweite Kolbenstange gelten.

Im Sinne der Ausgestaltung des ersten und zweiten Fluidweges stellt der Buchsenboden, vorzugsweise anhand von korrespondierenden Bohrungen, eine Fortsetzung der der Fluidwege dar.

Insbesondere sind die Aufnahmen für die Kolbenstangen derart ausgestaltet, dass die Kolbenstangen in dem Buchsenboden aufgenommen und der erste bzw. zweite Fluidweg von außen mit Druckfluid beaufschlagbar sind.

Ein Druckfluid kann im Sinne der vorliegenden Erfindung ein zweckmäßiges Gas, wie Luft, Stickstoff oder dergleichen, bzw. eine Flüssigkeit, wie z.B. Hydrauliköl oder dergleichen sein. Vorzugsweise ist im Sinne einer Greif- und Transportvorrichtung zur Weiterverarbeitung von Behältern vorgesehen, dass die erfindungsgemäße Höhenverstellvorrichtung mit Druckluft betrieben wird. In diesem Lichte sind Verbindungen zwischen einzelnen pneumatischen oder hydraulischen Komponenten in zweckmäßiger Weise luft- bzw. flüssigkeitsdicht auszugestalten.

Erfindungsgemäß umfasst die Höhenverstellvorrichtung eine Gewindestange und in dem Buchsenboden der Zylinderbuchse ist eine Gewindebohrung zum Eindrehen der Gewindestange eingelassen, sodass die Hubhöhe der Zylinderbuchse gegenüber dem Zylinderdeckel begrenzbar ist.

Die Gewindestange kann in diesem Sinne als ein Anschlag dienen, um einen Hubweg der Höhenverstellvorrichtung zu begrenzen. Die Gewindestange ist vorzugsweise kraft- und/oder formschlüssig in dem Buchsenboden der Zylinderbuchse aufgenommen, insbesondere in Form einer Schraubverbindung.

Die wenigstens eine Gewindebohrung kann koaxial zu der Längsachse des Zylinderrohrs bzw. der Zylinderbuchse vorgesehen sein. Alternativ können mehrere Aufnahmen bzw. Gewindebohrungen für mehrere Gewindestangen radial verteilt um die Längsachse des Zylinderrohrs bzw. der Zylinderbuchse vorgesehen sein.

Ein nebengeordneter Aspekt der vorliegenden Erfindung betrifft eine Greif- und Transportvorrichtung zum Greifen, Halten, Führen und Transportieren von insbesondere flaschenartigen Behältern. Die Greif- und Transportvorrichtung ist mit einer erfindungsgemäßen Höhenverstellvorrichtung vorgesehen, mit einem ersten Trägerring und einem zweiten Trägerring, die beide gleichgerichtet um die Symmetrieachse des Hubzylinders rotierbar sind, mit wenigstens einer Greifeinrichtung, welche mindestens ein erstes Greifarmpaar, mindestens ein zweites Greifarmpaar und einen Steuernocken zum Öffnen oder Schließen der Greifarmpaare aufweist, wobei das erste Greifarmpaar an oder auf dem ersten Trägerring und das zweite Greifarmpaar an oder auf dem zweiten Trägerring schwenkbar befestigt sind, und wobei die Greifarmpaare mittels des Steuernockens von einer Greifstellung in eine Öffnungsstellung oder umgekehrt bewegbar sind. Des Weiteren ist eine zylindrische, einseitig offene Traghülse mit einem Hülsenboden vorgesehen, welche verdrehsicher auf dem Buchsenboden der koaxialen Zylinderbuchse befestigt ist, wobei der zweite Trägerring an der offenen Stirnseite der Traghülse befestigt ist.

Der erste Trägerring der Greif- und Transportvorrichtung ist zur Aufnahme der ersten Greifarmpaare vorgesehen. Der zweite Trägerring ist zur Aufnahme der zweiten Greifarmpaare vorgesehen. Indem der Abstand zwischen erstem und zweitem Trägerring einstellbar ist, können verschiedene Behältertypen mittels der erfindungsgemäßen Greif- und Transportvorrichtung gehandhabt bzw. verarbeitet werden.

Insbesondere kann der erste Trägerring als unterer Trägerring verstanden werden, wobei der zweite Trägerring ein oberer Trägerring sein kann. Selbiges gilt auch z.B. für die ersten und zweiten Greifarmpaare. Dies trifft insbesondere dann zu, wenn die Greif- und Transportvorrichtung entlang ihrer Rotationsachse vertikal ausgerichtet ist.

Der Steuernocken dient im Zuge der fließbandtechnischen Verarbeitung von Behältern dazu, eine automatische Schließ- und Öffnungsbewegung des ersten Greifarmpaares und des zweiten Greifarmpaares bereitzustellen. Auf diese Weise kann ein Behälter mittels des ersten und des zweiten Greifarmpaares im Zuge einer Schließbewegung erfasst bzw. aufgegriffen werden sowie im Zuge der Öffnungsbewegung der Greifarmpaare wiederrum ab- bzw. freigegeben werden.

Des Weiteren ist die Traghülse verdrehsicher mit der Zylinderbuchse des Hubzylinders verbunden. Insbesondere kann die Traghülse mit der Zylinderbuchse kraft- und/oder formschlüssig verklemmt sein.

Darüber hinaus ist der zweite Trägerring an der offenen Stirnseite der Traghülse befestigt. So ist der zweite Trägerring gegenüber dem ersten Trägerring mittels der Traghülse positionierbar.

Indem die Traghülse mit dem zweiten Trägerring sowie verdrehsicher mit der Zylinderbuchse des Hubzylinders verbindbar ist, kann eine Feinjustierung des zweiten Trägerrings gegenüber dem ersten Trägerring erfolgen.

Eine solche Feinjustierung ist notwendig, um zwischen dem ersten und zweiten Trägerring eine Ausrichtung der ersten und zweiten Greifarmpaare zu erzielen. Bohrungen in dem ersten und zweiten Trägerring können aufeinander ausgerichtet werden, indem die Traghülse mit dem zweiten Trägerring gegenüber der Zylinderbuchse ausgerichtet und verdrehsicher mit dieser verbunden wird. In diese Bohrungen können korrespondierende Bolzen als Ausrichtungs- und/oder Beabstandungsmittel eingebracht werden. So erfolgt eine Verschränkung zwischen dem ersten und zweiten Trägerring; die korrekte Ausrichtung der ersten und zweiten Greifarmpaare zueinander ist gewährleistet.

Sofern der erste und zweite Trägerring zueinander ausgerichtet sind, können die Bolzen durch die Bohrungen des zweiten Trägerrings hindurchgeführt und in Gewindebohrungen des ersten Trägerrings eingeschraubtwerden. Alternativ ist auch vorstellbar, dass der erste und zweite Trägerring einfache Aufnahmebohrungen ohne Gewinde aufweisen, sodass der wenigstens eine Bolzen einsteckbar ist.

Nach einer weiteren Ausführungsform sind auf der Außenseite des Buchsenbodens der Zylinderbuchse Befestigungsmittel vorgesehen sind, die sich in Richtung der Symmetrieachse, ausgehend von dem Buchsenboden der Zylinderbuchse, erstrecken. Der Hülsenboden der Traghülse weist Langlöcher zur Aufnahme der Befestigungsmittel auf.

So ist eine Verschränkung, insbesondere eine Verdrehsicherung, zwischen der Traghülse und der Zylinderbuchse anhand der Befestigungsmittel, vorzugsweise ausgebildet als Gewindestange, bereitstellbar. Die Befestigungsmittel können beispielsweise in den Buchsenboden der Zylinderbuchse eingeschraubt werden und erstrecken sich in bzw. durch die Langlöcher des Hülsenbodens der Traghülse. So kann mittels z.B. einer Mutter oder dergleichen die Gewindestange an dem Hülsenboden verschraubt werden, wobei sich die Traghülse gegenüber der Zylinderbuchse verspannt.

Die Langlöcher des Hülsenbodens ermöglichen vorzugsweise eine rotatorische Feinjustierung der Traghülse gegenüber der Zylinderbuchse. So können insbesondere der erste und zweite Trägerring mit den ersten und zweiten Greifarmpaaren aufeinander ausgerichtet werden.

Darüber hinaus kann vorgesehen sein, dass der zweite Trägerring einen konzentrischen Innenring aufweist. Die zylindrische Traghülse weist an ihrer offenen Stirnseite ein Außengewinde und der Innenring des zweiten Trägerrings ein entsprechendes Innengewinde auf, wodurch der zweite Trägerring an der zylindrischen Traghülse befestigbar ist. So ist der zweite Trägerring mittels der Traghülse gegenüber dem ersten Trägerring positionierbar bzw. ausrichtbar.

In einer weiteren Ausführungsform weist der erste Trägerring ebenfalls einen konzentrischen Innenring auf, wobei der erste Trägerring mittels des konzentrischen Innenrings an dem Zylinderrohr oder an dem Zylinderboden des Hubzylinders befestigbar ist. Der erste und zweite Trägerring sind über den Hubzylinder und die Traghülse relativ zueinander positionierbar.

Nach einer weiteren Ausführungsform weist das Zylinderrohr oder der Zylinderboden des Hubzylinders einen Außenflansch auf, an welchem der erste Trägerring mittels seines konzentrischen Innenrings befestigbar ist, insbesondere durch Schrauben.

Der Außenflansch des Hubzylinders, an dem Zylinderrohr oder dem Zylinderboden, ist vorzugsweise radial umlaufend vorgesehen. So ist eine sichere Verbindung mit einer Mehrzahl an Schrauben sowie eine gleichmäßige Verbindungsstabilität entlang des Umfangs des ersten Trägerrings verfügbar. Ein Verkippen des ersten Trägerrings ist vermeidbar.

Somit kann eine vorteilhafte kraft- und/oder formschlüssige Verbindung zur Befestigung des ersten Trägerrings an dem Hubzylinder bereitgestellt werden, die gleichfalls zu Wartungszwecken einfach zur erreichen ist.

Des Weiteren kann vorgesehen sein, dass der konzentrische Innenring des ersten Trägerrings mit dem ersten Trägerring und/oder der konzentrische Innenring des zweiten Trägerrings mit dem zweiten Trägerring durch radiale Streben verbunden sind.

Insbesondere stellen der erste und/oder zweite Trägerring in diesem Sinne einen Rahmen mittels Verstrebungen zwischen Innen- und Außenring dar. Auf diese Weise kann eine stabile und gleichfalls leichte Ausgestaltung der ersten und/oder zweiten Trägerrings erzielt werden.

Alternativ können der erste und/oder zweite Trägerring im Sinne der vorliegenden Erfindung auch als eine Trägerplatte, eine teilweise ausgeschnittene Trägerplatte oder dergleichen vorgesehen sein.

Die Erfindung wird im Folgenden anhand von Ausführungsbeispielen unter Bezug auf die beigefügten schematischen Zeichnungen näher erläutert. Weitere Ausführungsformen des erfindungsgemäßen Gegenstandes sollen im Sinne der vorliegenden Erfindung hierdurch nicht ausgeschlossen sein.

Es zeigen schematisch:
- Fig. 1a, 1b:: erstes Ausführungsbeispiel eines Hubzylinders für eine Höhenverstellvorrichtung in einer Schnittansicht und einer perspektivischen Ansicht;
- Fig. 2a, 2b:: zweites Ausführungsbeispiel eines Hubzylinders für eine Höhenverstellvorrichtung in einer Schnittansicht und einer perspektivischen Ansicht;
- Fig. 3a, 3b:: drittes Ausführungsbeispiel eines Hubzylinders für eine Höhenverstellvorrichtung in einer Schnittansicht und einer Draufsicht;
- Fig. 4a, 4b:: Ausführungsbeispiel einer Traghülse mit erstem Trägerring für eine Greif- und Transportvorrichtung in einer Schnittansicht und einer Draufsicht;
- Fig. 5a, 5b:: Ausführungsbeispiel einer Greif- und Transportvorrichtung in einer Seitenansicht und einer perspektivischen Ansicht.

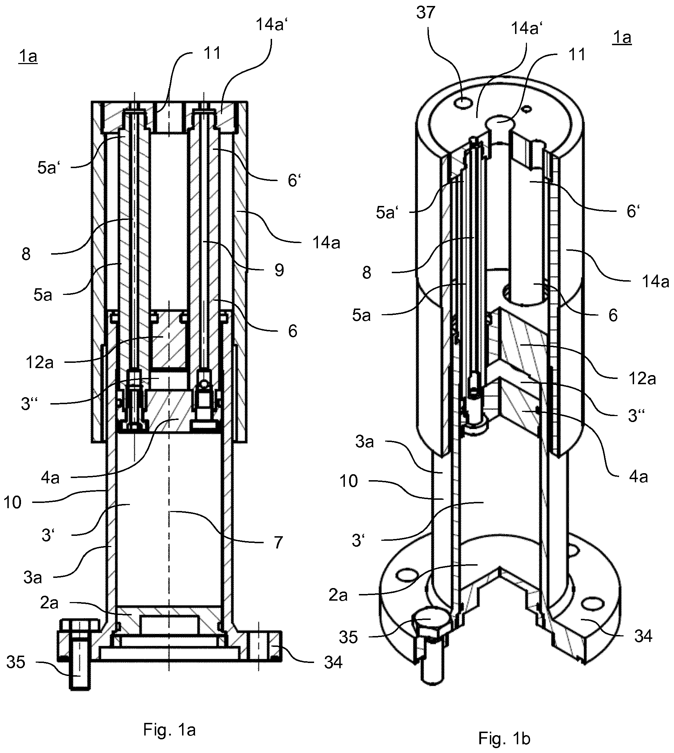

In Fig. 1a und 1b ist ein erstes Ausführungsbeispiel eines Hubzylinders 1a für eine Höhenverstellvorrichtung gezeigt.

Der Hubzylinder 1a ist mit einem Zylinderrohr 3a ausgebildet, das einen umlaufenden Flansch 34 aufweist. Der Flansch 34 ist mit Bohrungen ausgestaltet, sodass ein erster Trägerring 20 (in Fig. 1a, 1b nicht gezeigt) mittels Schrauben 35 an dem Zylinderrohr 3a des Hubzylinders 1a befestigbar ist.

Der Hubzylinder 1a ist mit einem Zylinderboden 2a in dem Zylinderrohr 3a vorgesehen. Der Zylinderboden 2a kann mittels einer Kombination aus Innengewinde in dem Zylinderrohr 3a und Außengewinde an dem Zylinderboden 2a in das Zylinderrohr 3a eingeschraubt sein. Der Zylinderboden 2a begrenzt das Innenvolumen des Zylinderrohrs 3a einseitig.

In dem Zylinderrohr ist ferner ein Kolben 4a angeordnet, der dichtend gleitend in dem Zylinderrohr 3a aufgenommen ist. Insbesondere ist der Kolben 4a derart ausgestaltet, dass er innerhalb des Zylinderrohrs 3a entlang einer Längsachse bzw. Symmetrieachse 7 des Zylinderrohrs 3a gleiten kann. Gleichzeitig unterteilt der Kolben 4a das Zylinderrohr 3a in ein erstes Zylinderinnenvolumen 3' und ein zweites Zylinderinnenvolumen 3". So bildet der Kolben 4a entlang seines Umfangs einen fluiddichten bzw. luftdichten Kontakt zu dem Zylinderrohr 3a aus.

Des Weiteren ist an dem Zylinderrohr 3a ein Zylinderdeckel 12a vorgesehen. Der Zylinderdeckel kann einteilig mit dem Zylinderrohr 3a ausgebildet sein oder in das Zylinderrohr 3a eingeschraubt sein. Insbesondere beschränkt der Zylinderdeckel 12a das Volumen des Zylinderrohrs 3a an der dem Zylinderboden 2a gegenüberliegenden Seite.

Zusammen mit dem Kolben 4a beschränkt der Zylinderboden 2a das erste Zylinderinnenvolumen 3', wobei der Zylinderdeckel 12a mit dem Kolben 4a das zweite Zylinderinnenvolumen 3" begrenzt.

Auf einer Außenfläche 10 des Zylinderrohrs 3a ist eine Zylinderbuchse 14a vorgesehen. Die Zylinderbuchse 14a ist derart ausgestaltet, dass sie entlang der Außenfläche 10 des Zylinderrohrs 3 in Längsrichtung einer Symmetrieachse 7 gleiten kann. So ist eine Relativbewegung zwischen Zylinderbuchse 14a und Zylinderrohr 3a möglich.

Die Zylinderbuchse 14a weist an einem Ende einen Buchsenboden 14a' auf, wobei das gegenüberliegende Ende der Zylinderbuchse offen ausgestaltet ist. So kann das Zylinderrohr 3a in die Zylinderbuchse 14a über die offene Seite eingleiten.

Der Buchsenboden 14a' ist in Fig. 1a, 1b mit einer zentralen, koaxialen Gewindebohrung 11 gezeigt, zur Aufnahme einer Gewindestange (in Fig. 1a, 1b nicht gezeigt). Insbesondere kann die Gewindestange als Anschlag für das Zylinderrohr 3a mit dem Zylinderdeckel 12a verstanden werden, sodass ein Hubweg des Hubzylinders 1a beliebig begrenzbar ist.

Des Weiteren weist der Buchsenboden 14a' Bohrungen bzw. Gewindebohrungen 37 zur Aufnahme von Befestigungsmitteln auf, die sich von der Außenseite des Buchsenbodens 14a' aus in Richtung der Symmetrieachse 7 erstrecken können.

Darüber hinaus ist der Hubzylinder 1a gemäß Fig. 1a und 1b mit einer ersten Kolbenstange 5a und einer zweiten Kolbenstange 6 vorgesehen. Die beiden Kolbenstangen 5a, 6 sind symmetrisch zu der Symmetrieachse 7 angeordnet.

Beide Kolbenstangen 5a, 6 sind an einem jeweils dem Kolben abgewandten Ende 5a', 6' in dem Buchsenboden 14a' aufgenommen und verschraubt. Hierzu weist der Buchsenboden 14a' Aufnahmebohrungen mit Innengewinden auf, sodass die erste und zweite Kolbenstange 5a, 6 mit jeweils einem Außengewinde in den Buchsenboden 14a' einschraubbar sind.

Die erste und zweite Kolbenstange 5a, 6 ragen in den Buchsenboden 14a' teilweise hinein. Alternativ können die erste und zweite Kolbenstange 5a, 6 durch den Buchsenboden 14a' hindurchragen.

Des Weiteren sind die Kolbenstangen 5a, 6 in dem Zylinderdeckel 12a und dem Kolben 4a aufgenommen. Insbesondere ragen die Kolbenstangen 5a, 6 durch den Zylinderdeckel 12a hindurch. Insofern können der Zylinderdeckel 12a mit seinen korrespondierenden Aufnahmebohrungen und die Kolbenstangen 5a, 6 als eine Führungspaarung verstanden werden.

Die erste und zweite Kolbenstange 5a, 6 ragen in den Kolben 4a hinein. Insbesondere ist der Kolben 4a gemäß Fig. 1a, 1b über jeweils eine Schraube bzw. Madenschraube oder dergleichen mit der ersten und zweiten Kolbenstange 5a, 6 verschraubt. Die Schrauben ragen jeweils in die Kolbenstangen 5a, 6 hinein und verschränken somit den Kolben 4a mit den Kolbenstangen 5a, 6.

Die erste Kolbenstange 5a bildet einen ersten Fluidweg 8 aus. Die zweite Kolbenstange 6 bildet einen zweiten Fluidweg 9 aus. Insbesondere sind der erste und zweite Fluidweg 8, 9 als Bohrungen in den Kolbenstangen 5a, 6 ausgestaltet.

Der erste Fluidweg 8 stellt eine strömungsmäßige Verbindung zu dem ersten Zylinderinnenvolumen 3' her. Der zweite Fluidweg 9 stellt eine strömungsmäßige Verbindung zu dem zweiten Zylinderinnenvolumen 3" her. In diesem Sinne ist der Hubzylinder 1a ein doppeltwirkender Hubzylinder.

So ist der zweite Fluidweg 9 in der zweiten Kolbenstange 6 als eine Längsbohrung über einen Teil der Länge der zweiten Kolbenstange 6 ausgebildet, wobei eine Verbindung zu dem zweiten Zylinderinnenvolumen 3" über eine zweite Bohrung, quer zur Längs- bzw. Symmetrieachse 7 erzielt wird.

Der erste Fluidweg 8 ist hingegen als eine Längsbohrung über die Gesamtlänge der ersten Kolbenstange 5a bereitstellbar, sodass eine strömungsmäßige Verbindung durch den Kolben 4a zu dem ersten Zylinderinnenvolumen 3' erzielbar ist.

Indem die erste und zweite Kolbenstange 5a, 6 mit dem Buchsenboden 14a' in Verbindung stehen bzw. teilweise in diesen hineinragen, werden der erste und zweite Fluidweg 8, 9 teilweise durch die Aufnahmebohrungen des Buchsenbodens 14a' ausgebildet. Hierbei ist die Aufnahme der Kolbenstangen 5a, 6 in dem Buchsenboden 14a' derart vorgesehen, dass der erste und zweite Fluidweg 8, 9 von außen mit Druckfluid bzw. Druckluft beaufschlagbar sind.

Anhand des ersten Ausführungsbeispiels eines Hubzylinders 1a ist nach Fig. 1a, 1b somit eine integrale Ausgestaltung von Fluidwegen 8, 9 zur Bereitstellung insbesondere eines doppeltwirkenden Hubzylinders möglich.

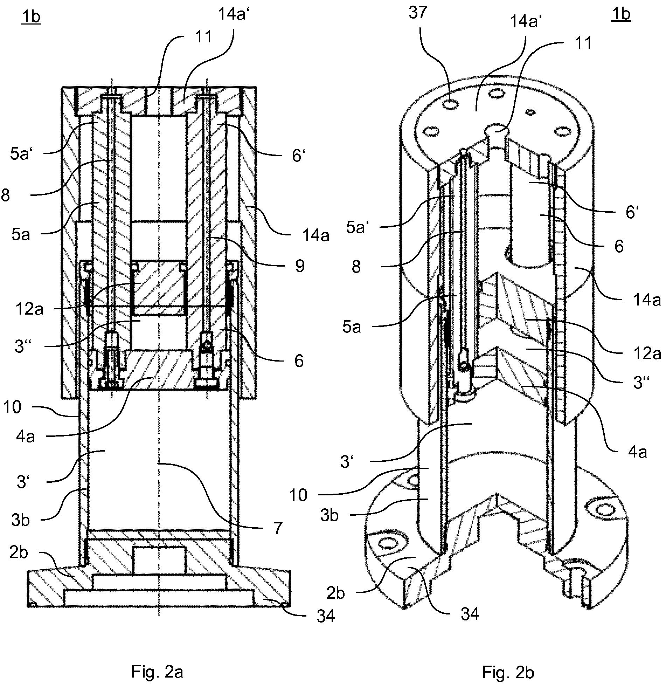

In Fig. 2a, 2b ist ein zweites Ausführungsbeispiel eines Hubzylinders 1b für eine Höhenverstellvorrichtung in einer Schnittansicht und einer perspektivischen Ansicht dargestellt.

Dieses zweite Ausführungsbeispiel des Hubzylinders 1b unterscheidet sich von dem ersten Ausführungsbeispiel nach Fig. 1a, 1b insbesondere in der Ausgestaltung des Zylinderrohrs 3b mit dem Zylinderboden 2b.

Der Zylinderboden 2b ist an einem Ende des Zylinderrohrs 3b aufgenommen, insbesondere in ein Innengewinde des Zylinderrohrs 3b eingeschraubt. Jedoch ist der umlaufende Flansch 34 zur Verbindung mit einem ersten Trägerring 20 gemäß Fig. 2a, 2b durch den Zylinderboden 2b ausgebildet. Das Zylinderrohr 3b sitzt in diesem Sinne auf dem Zylinderboden 2b bzw. dem Flansch 34 des Zylinderbodens 2b auf.

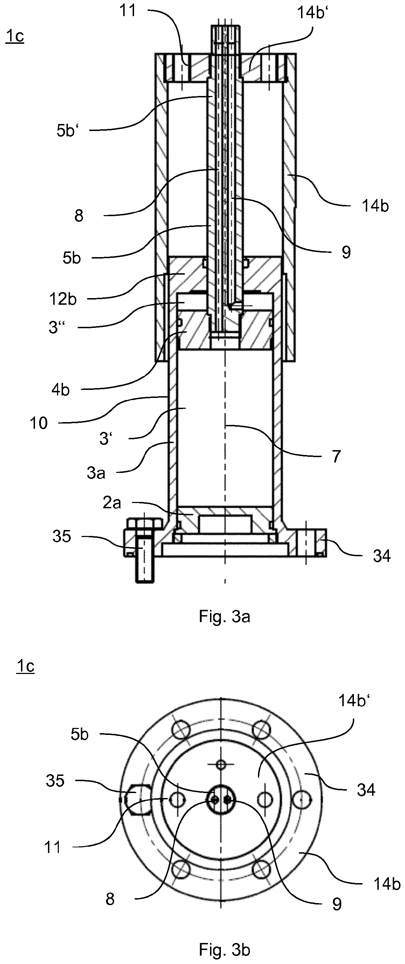

In Fig. 3a, 3b ist ein drittes Ausführungsbeispiel eines Hubzylinders 1c für eine Höhenverstellvorrichtung in einer Schnittansicht und einer Draufsicht dargestellt.

Dieses dritte Ausführungsbeispiel des Hubzylinders 1c unterscheidet sich von dem ersten Ausführungsbeispiel nach Fig. 1a, 1b insbesondere in der Ausgestaltung der Kolbenstange 5b in Verbindung mit dem Kolben 4b, dem Zylinderdeckel 12b und dem Buchsenboden 14b' der Zylinderbuchse 14b.

Nach Fig. 3a, 3b ist der Hubzylinder 1c mit einer einzelnen, ersten Kolbenstange 5b ausgestaltet, die koaxial zu der Symmetrieachse 7 angeordnet ist. Die Kolbenstange 5b weist den ersten Fluidweg 8 und den zweiten Fluidweg 9 auf.

Die Kolbenstange 5b ist derart in dem Kolben 4b aufgenommen, dass die Kolbenstange 5b teilweise in den Kolben 4b hineinrangt. Die Kolbenstange 5b ragt somit nicht durch den Kolben 4b hindurch. Jedoch ist die Aufnahmebohrung des Kolbens 4b für die Kolbenstange 5b derart ausgestaltet, dass der erste Fluidweg 8 in Verbindung mit dem Kolben 4b ausgestaltet ist, sodass eine strömungsmäßige Verbindung zu dem ersten Zylinderinnenvolumen 3' vorliegt.

Während der erste Fluidweg 8 in der Kolbenstange 5b als eine Längsbohrung in Richtung der Symmetrieachse 7 ausgestaltet ist, ist der zweite Fluidweg 9 wiederum durch eine Längsbohrung und eine Querbohrung, insbesondere quer zur Symmetrieachse 7, ausgebildet. Somit kann der zweite Fluidweg 9 eine strömungsmäßige Verbindung zu dem zweiten Zylinderinnenvolumen 3" bereitstellen.

Aus Fig. 3a ist ebenso wie aus Fig. 3b ersichtlich, dass der erste und zweite Fluidweg 8, 9 symmetrisch in der ersten Kolbenstange 5b vorgesehen sind.

Des Weiteren weist auch der Zylinderdeckel 12b eine korrespondierende Aufnahmebohrung für die einzelne erste Kolbenstange 5b mit dem ersten und zweiten Fluidweg 8, 9 auf.

Der Buchsenboden 14b' der Zylinderbuchse 14b ist ebenso korrespondierend zu der einzelnen Kolbenstange 5b ausgebildet. Die Kolbenstange 5b ragt gemäß Fig. 3a durch den Buchsenboden 14b' hindurch und ist auf diese Weise von außen zur Beaufschlagung des ersten und zweiten Fluidwegs 8, 9 mit Druckfluid zugänglich.

Darüber hinaus weist der Buchsenboden 14b' wenigstens eine Bohrung bzw. Gewindebohrung 11 zur Aufnahme einer Gewindestange als Anschlag für das Zylinderrohr 3a bzw. den Zylinderdeckel 12b auf.

Gemäß dem dritten Ausführungsbeispiel nach Fig. 3a, 3b ist somit ein erster und zweiter Fluidweg 8, 9 integral in der einzelnen ersten Kolbenstange 5b sowie den weiteren zugehörigen Komponenten des Hubzylinders 1c ausgestaltbar.

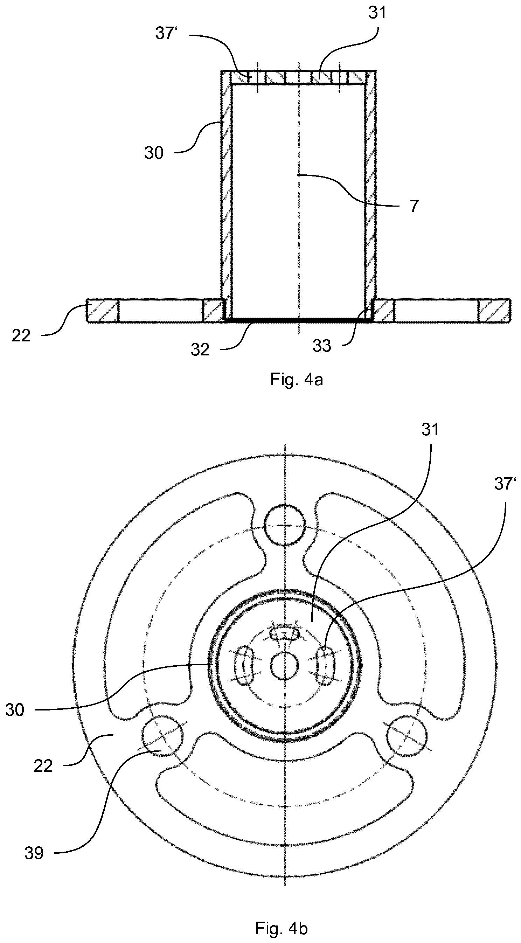

In Fig. 4a, 4b ist ein Ausführungsbeispiel einer Traghülse 30 mit einem zweiten Trägerring 22 für eine Greif- und Transportvorrichtung in einer Schnittansicht und einer Draufsicht veranschaulicht.

Die Traghülse 30 weist einen Hülsenboden 31 auf, sodass eine Seite der Traghülse 30 im Wesentlichen geschlossen ist. An der dem Hülsenboden 31 gegenüberliegenden Seite ist die Traghülse mit einer offenen Stirnseite 32 vorgesehen. Somit kann ein Hubzylinder 1a, 1b, 1c über die offene Stirnseite 32 in die Traghülse 30 eingesetzt werden.

Der Hülsenboden 31 weist Langlöcher 37' auf, sodass Befestigungsmittel, die in den Aufnahmebohrungen 37 des Buchsenbodens 14a', 14b' der Zylinderbuchse 14a, 14b befestigt sind, in die Langlöcher 37' hinein- bzw. hindurchragen können. Gemäß Fig. 3b sind insgesamt drei Langlöcher radial um die Symmetrieachse 7 angeordnet vorgesehen. Die drei Langlöcher 37' können unterschiedliche Größen aufweisen.

Insbesondere kann eine Gewindestange als Befestigungsmittel in dem Buchsenboden 14a', 14b' befestigt werden, sodass die Gewindestange (in Fig. 4a, 4b nicht gezeigt) durch eines der Langlöcher 37' hindurchragt und mittels z.B. einer Mutter mit dem Hülsenboden 31 verschränkt werden kann. So ist eine verdrehsichere Verbindung der Traghülse 30 mit der Zylinderbuchse 14a, 14b möglich. Dabei kann entlang der Langlöcher 37' eine Feinjustierung der Position der Traghülse 30 gegenüber der Zylinderbuchse 14a, 14b vorgenommen werden.

Des Weiteren ist in Fig. 4a, 4b der zweite Trägerring 22 in Verbindung mit der Traghülse 30 gezeigt. Der zweite Trägerring 22 weist ein Innengewinde auf und ist an einem Außengewinde 33 an der offenen Stirnseite 32 mit der Traghülse 30 verschraubt.

In Fig. 4b ist darüber hinaus erkennbar, dass der zweite Trägerring 22 mit insgesamt drei Aufnahmebohrungen 39 für jeweils einen Bolzen 38 ausgebildet ist. Anhand eines solchen Bolzen 38 und der korrespondierenden Aufnahmebohrungen 39 in einem zweiten Trägerring 22 kann eine Verschränkung zwischen ersten und zweitem Trägerring 20, 22 erzielt werden.

So ist anhand einer Feinjustierung entlang der Langlöcher, der Verschränkung von Traghülse 30 und Zylinderbuchse 14a, 14b und der Verschränkung von erstem und zweitem Trägerring 20, 22 die Möglichkeit gegeben, eine exakte Relativpositionierung zwischen erstem und zweitem Trägerring 20, 22 vorzunehmen und diese mittels der Bolzen 38 gegeneinander zu fixieren.

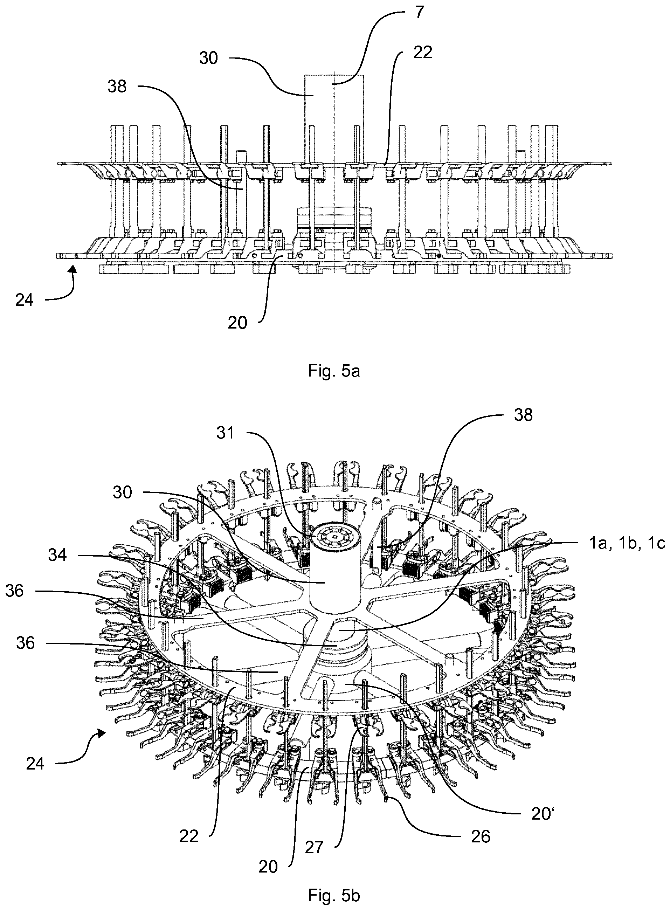

In Fig. 5a, 5b ist ein Ausführungsbeispiel einer Greif- und Transportvorrichtung in einer Seitenansicht und einer perspektivischen Ansicht dargestellt.

Die Greif- und Transportvorrichtung ist mit dem ersten Trägerring 20 und dem zweiten Trägerring 22 vorgesehen. Der erste Trägerring 20 ist als ein unterer Trägerring dargestellt, wobei der zweite Trägerring 22 den oberen Trägerring verkörpert.

Der zweite Trägerring 22 ist mit der Traghülse 30 kraft- und/oder formschlüssig verbunden, insbesondere mit der Traghülse 30 verschraubt. Der erste Trägerring 20 ist mit dem Flansch 34 des Hubzylinders 1a, 1b, 1c verbunden.

Entlang des ersten und zweiten Trägerrings 20, 22 sind jeweils erste und zweite Greifarmpaare 26, 27 als Greifeinrichtungen 24 bereitgestellt. Mit Hilfe der Relativpositionierung bzw. Feinjustierung entlang der Langlöcher 37' zwischen Traghülse 30 und Zylinderbuchse 14a, 14b können die ersten und zweiten Greifarmpaare 26, 27 zweckmäßig aufeinander ausgerichtet werden.

Nach Fig. 5b sind der erste und zweite Trägerring 20, 22 jeweils mit einem konzentrischen Innenring 20', 22' und radialen Streben 36 rahmenförmig ausgebildet. Alternativ können die ersten und zweiten Trägerringe 20, 22 einstückig ausgebildet sein.

Entlang einzelner Streben 36 des ersten und zweiten Trägerrings 20, 22 sind Bolzen 38 in Aufnahmebohrungen 39 derart vorgesehen, dass der erste und zweite Trägerring 20, 22 verdrehsicher gegeneinander verschränkt sind. Insbesondere können die Bolzen 38 durch die Aufnahmebohrungen 39 des zweiten Trägerrings 22 hindurchführbar sein, während die Bolzen 38 in korrespondierende Gewindebohrungen des ersten Trägerrings 20 einschraubbar sind. Somit ist eine geeignete Ausrichtung der ersten und zweiten Greifarmpaare 26, 27 zueinander sichergestellt.

Anhand der Höhenverstellvorrichtung sowie der Greif- und Transportvorrichtung ist eine einfache sowie schnell und hygienisch adaptierbare Vorrichtung zur Verarbeitung von unterschiedlichen Behältertypen, wie z.B. Flaschen verschiedener Form und Größe, bereitgestellt.

### Bezugszeichenliste

- 1a, 1b, 1c: Hubzylinder
- 2a, 2b: Zylinderboden
- 3a, 3b: Zylinderrohr
- 3': erster Zylinderraum
- 3": zweiter Zylinderraum
- 4a, 4b: Kolben
- 5a, 5b: erste Kolbenstange
- 5a', 5b': abgewandtes Ende der ersten Kolbenstange
- 6: zweite Kolbenstange
- 6': abgewandtes Ende der zweiten Kolbenstange
- 7: Symmetrieachse des Hubzylinders
- 8: erste Fluidleitung
- 9: zweite Fluidleitung
- 10: Außenmantelfläche des Zylinderrohrs
- 12a, 12b: Zylinderdeckel
- 14a, 14b: Zylinderbuchse
- 14a', 14b': Buchsenboden
- 20: erster Trägerring
- 20': konzentrischer Innenring
- 22: zweiter Trägerring
- 24: Greifeinrichtung
- 26: erstes Greifarmpaar
- 27: zweites Greifarmpaar
- 30: Traghülse
- 31: Hülsenboden
- 32: offene Stirnseite
- 33: Außengewinde (der Traghülse)
- 34: Außenflansch
- 35: Schrauben
- 36: radiale Streben
- 37: Aufnahmebohrung (für Befestigungsmittel)
- 37': Langloch
- 38: Bolzen
- 39: Aufnahmebohrungen (für Bolzen)

## Patentansprüche

1. Höhenverstellvorrichtung für eine Greif- und Transporteinrichtung für Behälter, mit einem Hubzylinder (1a, 1b), der einen Zylinderboden (2a, 2b) aufweist, ein Zylinderrohr (3a, 3b), einen in dem Zylinderrohr (3a, 3b) dichtend gleitend angeordneten Kolben (4a), einen Zylinderdeckel (12a) und mit dem Kolben (4a) verbundene erste und zweite Kolbenstangen (5a, 6), wobei die erste und zweite Kolbenstange (5a, 6) mit ihrem dem Kolben (4a) abgewandten Ende (5a', 6) dichtend gleitend durch den Zylinderdeckel (12a) aus dem Zylinderrohr (3) herausgeführt und die beiden Kolbenstangen (5a, 6) exzentrisch in dem Kolben (4a) angeordnet sind,
wobei die erste und zweite Kolbenstange (5a, 6) in dem Zylinderrohr (3a, 3b) angeordnet sind, wobei die erste Kolbenstange (5a) wenigstens einen ersten Fluidweg (8) und die zweite Kolbenstange (6) einen zweiten Fluidweg (9) aufweist, welche an den dem Kolben (4a) abgewandten Ende (5a'6') der Kolbenstangen (5a, 6) mit einem Druckfluid beaufschlagbar sind, und dass der erste Fluidweg (8) durch den Kolben (4a) hindurchführt und mit einem ersten Zylinderinnenraum (3') zylinderbodenseitig des Kolbens (4a) kommuniziert und dass der zweite Fluidweg (9) mit einem zweiten Zylinderinnenraum (3") zylinderdeckelseitig des Kolbens (4a) kommuniziert,
wobei eine zur Symmetrieachse (7) des Hubzylinders (1a, 1b) koaxial angeordnete Zylinderbuchse (14a) mit einem Buchsenboden (14a') auf den dem Kolben (4a) abgewandten Ende (5a', 6') der Kolbenstangen (5a, 6) vorgesehen ist, wobei die Zylinderbuchse (14a) in Richtung des Zylinderbodens (2a, 2b) des Zylinderrohrs (3a, 3b) offen ist und gleitend auf der Außenmantelfläche (10) des Zylinderrohrs (3a, 3b) in axialer Richtung des Hubzylinders (1a, 1b) verschiebbar angeordnet ist, wobei die Fluidwege (8, 9) wenigstens teilweise in dem Buchsenboden (14a') der Zylinderbuchse (14a) aufgenommen und von außen zur Beaufschlagung mit Druckfluid zugänglich sind,
wobei die Höhenverstellvorrichtung eine Gewindestange aufweist,
wobei in dem Buchsenboden (14a') der Zylinderbuchse (14a) wenigstens eine Gewindebohrung (11) zum Eindrehen der Gewindestange eingelassen ist, sodass die Hubhöhe der Zylinderbuchse (14a) gegenüber dem Zylinderdeckel (12a) begrenzbar ist.

2. Höhenverstellvorrichtung für eine Greif- und Transporteinrichtung für Behälter, mit einem Hubzylinder (1c), der einen Zylinderboden (2a, 2b) aufweist, ein Zylinderrohr (3a, 3b), einen in dem Zylinderrohr (3a, 3b) dichtend gleitend angeordneten Kolben (4b), einen Zylinderdeckel (12b) und eine mit dem Kolben (4b) verbundene erste Kolbenstange (5b), wobei die erste Kolbenstange (5b) mit ihrem dem Kolben (4b) abgewandten Ende (5b') dichtend gleitend durch den Zylinderdeckel (12b) aus dem Zylinderrohr (3a, 3b) herausgeführt ist,
wobei die erste Kolbenstange (5b) in dem Zylinderrohr (3a, 3b) angeordnet ist, wobei die erste Kolbenstange (5b) wenigstens einen ersten und zweiten Fluidweg (8, 9) aufweist, welcher an den dem Kolben (4b) abgewandten Ende (5b') der ersten Kolbenstangen (5b) mit einem Druckfluid beaufschlagbar ist, und dass der erste Fluidweg (8) durch den Kolben (4b) hindurchführt und mit einem ersten Zylinderinnenraum (3') zylinderbodenseitig des Kolbens (4b) kommuniziert und dass der zweite Fluidweg (9) mit einem zweiten Zylinderinnenraum (3") zylinderdeckelseitig des Kolbens (4b) kommuniziert,
wobei eine zur Symmetrieachse (7) des Hubzylinders (1c) koaxial angeordnete Zylinderbuchse (14b) mit einem Buchsenboden (14b') auf den dem Kolben (4b) abgewandten Ende (5b') der Kolbenstange (5b) vorgesehen ist, wobei die Zylinderbuchse (14b) in Richtung des Zylinderbodens (2a, 2b) des Zylinderrohrs (3a, 3b) offen ist und gleitend auf der Außenmantelfläche (10) des Zylinderrohrs (3a, 3b) in axialer Richtung des Hubzylinders (1c) verschiebbar angeordnet ist, wobei die Fluidwege (8, 9) wenigstens teilweise in dem Buchsenboden (14b') der Zylinderbuchse (14b) aufgenommen und von außen zur Beaufschlagung mit Druckfluid zugänglich sind,
**dadurch gekennzeichnet, dass**
die Höhenverstellvorrichtung eine Gewindestange aufweist,
wobei in dem Buchsenboden (14b') der Zylinderbuchse (14b) wenigstens eine Gewindebohrung (11) zum Eindrehen der Gewindestange eingelassen ist, sodass die Hubhöhe der Zylinderbuchse (14b) gegenüber dem Zylinderdeckel (12b) begrenzbar ist.

3. Höhenverstellvorrichtung nach Anspruch 1,
wobei die erste Kolbenstange (5a) und die zweite Kolbenstange (6) symmetrisch zur Symmetrieachse (7) des Hubzylinders (1a, 1b) angeordnet sind.

4. Greif- und Transportvorrichtung zum Greifen, Halten, Führen und Transportieren von insbesondere flaschenartigen Behältern, mit einer Höhenverstellvorrichtung nach einem der vorhergehenden Ansprüche, mit einem ersten Trägerring (20) und einem zweiten Trägerring (22), die beide gleichgerichtet um die Symmetrieachse (7) des Hubzylinders (1a, 1b, 1c) rotierbar sind, mit wenigstens einer Greifeinrichtung (24), welche mindestens ein erstes Greifarmpaar (26), mindestens ein zweites Greifarmpaar (27) und einen Steuernocken zum Öffnen oder Schließen der Greifarmpaare (26, 27) aufweist, wobei das erste Greifarmpaar (26) an oder auf dem ersten Trägerring (20) und das zweite Greifarmpaar (27) an oder auf dem zweiten Trägerring (22) schwenkbar befestigt sind, und wobei die Greifarmpaare (26, 27) mittels des Steuernockens von einer Greifstellung in eine Öffnungsstellung oder umgekehrt bewegbar sind,
**gekennzeichnet durch**
eine zylindrische, einseitig offene Traghülse (30) mit einem Hülsenboden (31), welche verdrehsicher auf dem Buchsenboden (14a', 14b') der koaxialen Zylinderbuchse (14a, 14b) befestigt ist, und **dadurch** gekennzeichnet, dass der zweite Trägerring (22) an der offenen Stirnseite (32) der Traghülse (30) befestigt ist.

5. Greif- und Transportvorrichtung nach Anspruch 4, bei der auf der Außenseite des Buchsenbodens (14a', 14b') der Zylinderbuchse (14a, 14b) Befestigungsmittel vorgesehen sind, die sich in Richtung der Symmetrieachse (7), ausgehend von dem Buchsenboden (14a', 14b') der Zylinderbuchse (14a, 14b), erstrecken,
**dadurch gekennzeichnet, dass**
der Hülsenboden (31) der Traghülse (30) Langlöcher (37') zur Aufnahme der Befestigungsmittel aufweist.

6. Greif- und Transportvorrichtung nach Anspruch 4 oder 5, bei welcher der zweite Trägerring (22) einen konzentrischen Innenring (22') aufweist,
**dadurch gekennzeichnet, dass**
die zylindrische Traghülse (30) an ihrer offenen Stirnseite (32) ein Außengewinde (33) und der Innenring (22') des zweiten Trägerrings (22) ein entsprechendes Innengewinde aufweisen, wodurch der zweite Trägerring (22) an der zylindrischen Traghülse (30) befestigbar ist.

7. Greif- und Transportvorrichtung nach Anspruch 6, bei welcher der erste Trägerring (20) ebenfalls einen konzentrischen Innenring (20') aufweist,
**dadurch gekennzeichnet, dass**
der erste Trägerring (20) mittels des konzentrischen Innenrings (20') an dem Zylinderrohr (2a) oder an dem Zylinderboden (2b) des Hubzylinders (1a, 1b, 1c) befestigbar ist.

8. Greif- und Transportvorrichtung nach Anspruch 7,
**dadurch gekennzeichnet, dass**
das Zylinderrohr (3a) oder der Zylinderboden (2b) des Hubzylinders (1a, 1b, 1c) einen Außenflansch (34) aufweist, an welchem der erste Trägerring (20) mittels seines konzentrischen Innenrings (20') befestigbar ist, insbesondere durch Schrauben (35).

9. Greif- und Transportvorrichtung nach einem der Ansprüche 6 bis 8,
**dadurch gekennzeichnet, dass**
der konzentrische Innenring (20') des ersten Trägerrings (20) mit dem ersten Trägerring (20) und/oder der konzentrische Innenring (22') des zweiten Trägerrings (22) mit dem zweiten Trägerring (22) durch radiale Streben (36) verbunden sind.

## Claims

1. A height-adjusting device for a gripping and transporting mechanism for containers having a lifting cylinder (1a, 1b) comprising a cylinder base (2a, 2b), a cylinder tube (3a, 3b), a piston (4a) arranged sealingly slidable in the cylinder tube (3a, 3b), a cylinder cover (12a) and a first and second piston rod (5a, 6) connected to the piston (4a), wherein the first and second piston rod (5a, 6) are guided out of the cylinder tube (3) through the cylinder cover (12a) in sealingly sliding manner by their end (5a', 6) opposite the piston (4a) and the two piston rods (5a, 6) are arranged eccentrically in the piston (4a),
wherein the first and second piston rod (5a, 6) are arranged in the cylinder tube (3a, 3b), wherein the first piston rod (5a) has at least one first fluid path (8) and the second piston rod (6) has a second fluid path (9) able to be pressurized by a pressurized fluid at the end (5a', 6) of the piston rod (5a, 6) opposite from the piston (4a) and the first fluid path (8) passes through the piston (4a) and communicates with a first cylinder interior (3') at the cylinder base-side of the piston (4a) and the second fluid path (9) communicates with a second cylinder interior (3") at the cylinder cover-side of the piston (4a),
wherein a cylinder liner (14a) arranged coaxially with the symmetrical axis (7) of the lifting cylinder (1a, 1b) is provided which has a liner base (14a') on the opposite end (5a', 6) of the piston rod (5a, 6) from the piston (4a),
wherein the cylinder liner (14a) is open toward the cylinder base (2a, 2b) of the cylinder tube (3a, 3b) and arranged on the outer lateral surface (10) of the cylinder tube (3a, 3b) so as to be slidably displaceable in the axial direction of the lifting cylinder (1a, 1b), wherein the fluid paths (8, 9) are at least partly accommodated in the liner base (14a') of the cylinder liner (14a) and accessible from the outside for pressurizing with pressurized fluid,
wherein the height-adjusting device comprises a threaded rod,
wherein at least one tapped hole (11) is inset into the liner base (14a') of the cylinder liner (14a) for screwing in the threaded rod so that the vertical lift of the cylinder liner (14a) can be limited vis-à-vis the cylinder cover (12a).

2. A height-adjusting device for a gripping and transporting mechanism for containers having a lifting cylinder (1c) comprising a cylinder base (2a, 2b), a cylinder tube (3a, 3b), a piston (4b) arranged sealingly slidable in the cylinder tube (3a, 3b), a cylinder cover (12b) and a first piston rod (5b) connected to the piston (4b), wherein the first piston rod (5b) is guided out of the cylinder tube (3a, 3b) through the cylinder cover (12b) in sealingly sliding manner by its end (5b') opposite the piston (4b),
wherein the first piston rod (5b) is arranged in the cylinder tube (3a, 3b),
wherein the first piston rod (5b) has at least one first and second fluid path (8, 9) able to be pressurized by a pressurized fluid at the end (5b') of the first piston rod (5b) opposite from the piston (4b) and the first fluid path (8) passes through the piston (4b) and communicates with a first cylinder interior (3') at the cylinder base-side of the piston (4b) and the second fluid path (9) communicates with a second cylinder interior (3") at the cylinder cover-side of the piston (4b),
wherein a cylinder liner (14b) arranged coaxially with the symmetrical axis (7) of the lifting cylinder (1c) is provided which has a liner base (14b') on the opposite end (5b') of the piston rod (5b) from the piston (4b),
wherein the cylinder liner (14b) is open toward the cylinder base (2a, 2b) of the cylinder tube (3a, 3b) and arranged on the outer lateral surface (10) of the cylinder tube (3a, 3b) so as to be slidably displaceable in the axial direction of the lifting cylinder (1c), wherein the fluid paths (8, 9) are at least partly accommodated in the liner base (14b') of the cylinder liner (14b) and accessible from the outside for pressurizing with pressurized fluid,
wherein the height-adjusting device comprises a threaded rod,
wherein at least one tapped hole (11) is inset into the liner base (14b') of the cylinder liner (14b) for screwing in the threaded rod so that the vertical lift of the cylinder liner (14b) can be limited vis-à-vis the cylinder cover (12b).

3. The height-adjusting device according to claim 1,
wherein the first piston rod (5a) and the second piston rod (6) are arranged symmetrically to the symmetrical axis (7) of the lifting cylinder (1a, 1b).

4. A gripping and transporting mechanism for gripping, holding, guiding and transporting particularly bottle-like containers which comprises a height-adjusting device according to one of the preceding claims having a first support ring (20) and a second support ring (22), both being rotatable about the symmetrical axis (7) of the lifting cylinder (1a, 1b, 1c) in parallel alignment, at least one gripping mechanism (24) which comprises at least one first gripper arm pair (26), at least one second gripper arm pair (27) and a control cam for opening or closing the gripper arm pairs (26, 27), wherein the first gripper arm pair (26) is pivotably secured to or on the first support ring (20) and the second gripper arm pair (27) pivotably secured to or on the second support ring (22), and wherein the gripper arm pairs (26, 27) are movable from a gripping position into an open position or vice versa by means of the control cam,
**characterized by**
a cylindrical supporting sleeve (30) open on one side having a sleeve base (31) rotationally secured to the liner base (14a', 14b') of the coaxial cylinder liner (14a, 14b), and **characterized in that** the second support ring (22) is secured to the open end face (32) of the supporting sleeve (30).

5. The gripping and transporting mechanism according to claim 4, in which fixing means are provided on the outer side of the liner base (14a', 14b') of the cylinder liner (14a, 14b) which extend in the direction of the symmetrical axis (7) from the liner base (14a', 14b') of the cylinder liner (14a, 14b),
**characterized in that**
the sleeve base (31) of the supporting sleeve (30) comprises elongated holes (37') for receiving the fixing means.

6. The gripping and transporting mechanism according to claim 4 or 5, in which the second support ring (22) comprises a concentric inner ring (22'),
**characterized in that**
the cylindrical supporting sleeve (30) has an external thread (33) on its open end face (32) and the inner ring (22') of the second support ring (22) has a corresponding internal thread, whereby the second support ring (22) can be secured to the cylindrical supporting sleeve (30).

7. The gripping and transporting mechanism according to claim 6, in which the first support ring (20) likewise comprises a concentric inner ring (20'),
**characterized in that**
the first support ring (20) can be secured to the cylinder tube (2a) or to the cylinder base (2b) of the lifting cylinder (1a, 1b, 1c) by means of the concentric inner ring (20').

8. The gripping and transporting mechanism according to claim 7,
**characterized in that**
the cylinder tube (3a) or the cylinder base (2b) of the lifting cylinder (1a, 1b, 1c) exhibits an external flange (34) to which the first support ring (20) can be secured via its concentric inner ring (20'), particularly by means of screws (35).

9. The gripping and transporting mechanism according to one of claims 6 to 8,
**characterized in that**
the concentric inner ring (20') of the first support ring (20) is connected to the first support ring (20) and/or the concentric inner ring (22') of the second support ring (22) is connected to the second support ring (22) by radial struts (36).

## Revendications

1. Dispositif de réglage en hauteur pour un dispositif de préhension et de transport de récipients, comprenant un vérin de levage (1a, 1b) qui présente un fond de cylindre (2a, 2b), un tube cylindrique (3a, 3b), un piston (4a) disposé de manière coulissante et étanche dans le tube cylindrique (3a, 3b), un couvercle de cylindre (12a) et au moins une première et une deuxième tige de piston (5a, 6) reliées au piston (4a), les première et deuxième tiges de piston (5a, 6) sortant, par leur extrémité (5a', 6) détournée du piston (4a), de manière coulissante et étanche hors du tube cylindrique (3) à travers le couvercle de cylindre (12a), et les deux tiges de piston (5a, 6) étant disposées de façon excentrée dans le piston (4a),
dans lequel
les première et deuxième tiges de piston (5a, 6) sont disposées dans le tube cylindrique (3a, 3b), la première tige de piston (5a) présente au moins une première voie de passage de fluide (8), et la deuxième tige de piston (6) présente une deuxième voie de passage de fluide (9), qui peuvent être alimentées en fluide sous pression à l'extrémité (5a', 6') des tiges de piston (5a, 6) détournée du piston (4a), et
la première voie de passage de fluide (8) traverse le piston (4a) et communique avec un premier espace intérieur de cylindre (3') du côté fond de cylindre du piston (4a), et la deuxième voie de passage de fluide (9) communique avec un deuxième espace intérieur de cylindre (3") du côté couvercle de cylindre du piston (4a),
une douille cylindrique (14a) disposée coaxialement à l'axe de symétrie (7) du vérin de levage (1a, 1b) et présentant un fond de douille (14a') est prévue à l'extrémité (5a', 6') des tiges de piston (5a, 6) détournée du piston (4a),
la douille cylindrique (14a) est ouverte en direction du fond de cylindre (2a, 2b) du tube cylindrique (3a, 3b) et est disposée de manière coulissante sur la surface enveloppe extérieure (10) du tube cylindrique (3a, 3b) en étant mobile en translation dans la direction axiale du vérin de levage (1a, 1b),
les voies de passage de fluide (8, 9) sont logées au moins partiellement dans le fond de douille (14a') de la douille cylindrique (14a) et sont accessibles de l'extérieur pour l'alimentation en fluide sous pression,
le dispositif de réglage en hauteur comprend une tige filetée,
dans le fond de douille (14a') de la douille cylindrique (14a) est ménagé au moins un trou taraudé (11) pour le vissage de la tige filetée, de sorte que la hauteur de levage de la douille cylindrique (14a) par rapport au couvercle de cylindre (12a) peut être limitée.

2. Dispositif de réglage en hauteur pour un dispositif de préhension et de transport de récipients, comprenant un vérin de levage (1c) qui présente un fond de cylindre (2a, 2b), un tube cylindrique (3a, 3b), un piston (4b) disposé de manière coulissante et étanche dans le tube cylindrique (3a, 3b), un couvercle de cylindre (12b) et au moins une première tige de piston (5b) reliée au piston (4b), la première tige de piston (5b) sortant, par son extrémité (5b') détournée du piston (4b), de manière coulissante et étanche hors du tube cylindrique (3a, 3b) à travers le couvercle de cylindre (12b),
dans lequel
la première tige de piston (5b) est disposée dans le tube cylindrique (3a, 3b), la première tige de piston (5b) présente au moins une première et une deuxième voie de passage de fluide (8, 9) qui peut être alimentée en fluide sous pression à l'extrémité (5b') de la première tige de piston (5b) détournée du piston (4b), et
la première voie de passage de fluide (8) traverse le piston (4b) et communique avec un premier espace intérieur de cylindre (3') du côté fond de cylindre du piston (4a), et la deuxième voie de passage de fluide (9) communique avec un deuxième espace intérieur de cylindre (3") du côté couvercle de cylindre du piston (4b),
une douille cylindrique (14b) disposée coaxialement à l'axe de symétrie (7) du vérin de levage (1c) et présentant un fond de douille (14b') est prévue à l'extrémité (5b') de la tige de piston (5b) détournée du piston (4b),
la douille cylindrique (14b) est ouverte en direction du fond de cylindre (2a, 2b) du tube cylindrique (3a, 3b) et est disposée de manière coulissante sur la surface enveloppe extérieure (10) du tube cylindrique (3a, 3b) en étant mobile en translation dans la direction axiale du vérin de levage (1c),
les voies de passage de fluide (8, 9) sont logées au moins partiellement dans le fond de douille (14b') de la douille cylindrique (14b) et sont accessibles de l'extérieur pour l'alimentation en fluide sous pression,
le dispositif de réglage en hauteur comprend une tige filetée,
dans le fond de douille (14b') de la douille cylindrique (14b) est ménagé au moins un trou taraudé (11) pour le vissage de la tige filetée, de sorte que la hauteur de levage de la douille cylindrique (14b) par rapport au couvercle de cylindre (12b) peut être limitée.

3. Dispositif de réglage en hauteur selon la revendication 1,
dans lequel la première tige de piston (5a) et la deuxième tige de piston (6) sont disposées symétriquement par rapport à l'axe de symétrie (7) du vérin de levage (1a, 1b).

4. Dispositif de préhension et de transport pour saisir, maintenir, guider et transporter des récipients, en particulier de type bouteille, comprenant un dispositif de réglage en hauteur selon l'une des revendications précédentes, comprenant une première bague de support (20) et une deuxième bague de support (22), qui peuvent toutes deux tourner dans le même sens autour de l'axe de symétrie (7) du vérin de levage (1a, 1b, 1c), comprenant au moins un organe de préhension (24) qui présente au moins une première paire de bras de préhension (26), au moins une deuxième paire de bras de préhension (27) et une came de commande pour ouvrir ou fermer les paires de bras de préhension (26, 27), la première paire de bras de préhension (26) étant fixée de manière pivotante au niveau ou sur la première bague de support (20) et la deuxième paire de bras de préhension (27) étant fixée de manière pivotante au niveau ou sur la deuxième bague de support (22), et les paires de bras de préhension (26, 27) pouvant être déplacées au moyen de la came de commande d'une position de préhension vers une position d'ouverture ou inversement,
**caractérisé par**
un manchon porteur (30) cylindrique, ouvert d'un côté, ayant un fond de manchon (31), qui est fixé sans possibilité de rotation sur le fond de douille (14a', 14b') de la douille cylindrique coaxiale (14a, 14b), et
**caractérisée en ce que** la deuxième bague de support (22) est fixée sur la face frontale ouverte (32) du manchon porteur (30).

5. Dispositif de préhension et de transport selon la revendication 4,
dans lequel il est prévu, sur la face extérieure du fond de douille (14a', 14b') de la douille cylindrique (14a, 14b), des moyens de fixation qui s'étendent dans la direction de l'axe de symétrie (7) à partir du fond de douille (14a', 14b') de la douille cylindrique (14a, 14b),
**caractérisé en ce que** le fond de manchon (31) du manchon porteur (30) présente des trous oblongs (37') pour recevoir les moyens de fixation.

6. Dispositif de préhension et de transport selon la revendication 4 ou 5,
dans lequel la deuxième bague de support (22) présente une bague intérieure concentrique (22'),
**caractérisé en ce que** le manchon porteur cylindrique (30) présente, sur sa face frontale ouverte (32), un filetage (33), et la bague intérieure (22') de la deuxième bague de support (22) présente un taraudage correspondant, ce qui permet de fixer la deuxième bague de support (22) sur le manchon porteur cylindrique (30).

7. Dispositif de préhension et de transport selon la revendication 6,
dans lequel la première bague de support (20) présente également une bague intérieure concentrique (20'),
**caractérisé en ce que** la première bague de support (20) peut être fixée au tube cylindrique (2a) ou au fond de cylindre (2b) du vérin de levage (1a, 1b, 1c) au moyen de la bague intérieure concentrique (20').

8. Dispositif de préhension et de transport selon la revendication 7,
**caractérisé en ce que** le tube cylindrique (3a) ou le fond de cylindre (2b) du vérin de levage (1a, 1b, 1c) comporte une bride extérieure (34) sur laquelle la première bague de support (20) peut être fixée au moyen de sa bague intérieure concentrique (20'), en particulier par des vis (35).

9. Dispositif de préhension et de transport selon l'une des revendications 6 à 8,
**caractérisé en ce que**
la bague intérieure concentrique (20') de la première bague de support (20) est reliée à la première bague de support (20) et/ou la bague intérieure concentrique (22') de la deuxième bague de support (22) est reliée à la deuxième bague de support (22), par l'intermédiaire d'entretoises radiales (36).
